# FASCICULE DE BREVET EUROPEEN

(11) **EP 0 475 800 B1**
(45) Date de publication et mention de la délivrance du brevet: **19.01.1994**
(21) Numéro de dépôt: 91402213.2
(22) Date de dépôt: 09.08.1991
(51) Int. Cl.: B60R 25/04

(54) **Système de protection de véhicule**
Fahrzeugsicherungssystem
Protection system for a vehicle

(30) Priorité: 21.08.1990 FR 9010535
(43) Date de publication de la demande: 18.03.1992
(73) Titulaire: S.T.A.V. "SOCIETE TOULOUSAINE D'ANTIVOLS" (S.A.R.L.), F-31400 Toulouse (FR)
(72) Inventeur: le Couturier, Georges, F-76520 Franqueville Saint Pierre (FR)
(74) Mandataire: Martinet & Lapoux

(56) Documents cités:
- DE-A- 2 929 772
- FR-A- 2 550 499
- GB-A- 2 200 086
- US-A- 4 071 007
- US-A- 4 636 651
- US-A- 4 892 167

## Description

La présente invention concerne la protection de véhicule automobile connue de DE-A-2 929 772 lorsque celui-ci est déjà muni d'un système de protection comprenant notamment :
- des moyens de coupure d'alimentation incluant un contact à deux directions qui relie les moyens de démarrage du véhicule respectivement à une borne positive de la batterie du véhicule et à la masse du véhicule en réponse à des états de travail et repos, un contacteur d'antivol du véhicule étant connecté en série avec ledit contact à l'état de travail
- des moyens pour mettre au travail les moyens de coupure d'alimentation après ouverture normale des portières du véhicule, et
- des moyens pour mettre au repos les moyens de coupure d'alimentation par condamnation d'au moins l'une des portières.

Un tel système est généralement logé dans un boîtier installé dans le tableau de bord du véhicule. Le contact au travail est relié à la borne positive de la batterie à travers un câble, afin de pouvoir fermer le contacteur d'antivol et mettre en marche les moyens de démarrage du véhicule.

A l'état de repos, portières de véhicule condamnées, le contact est simplement ouvert. Un voleur peut alors aisément shunter le contacteur afin de connecter la borne positive de batterie aux moyens de démarrage.

L'invention vise à fournir un système de protection qui empêche une alimentation électrique des moyens de démarrage par shuntage du contacteur d'antivol.

A cette fin, un système de protection de véhicule tel que défini dans l'entrée en matière est caractérisé en ce qu'il comprend des moyens de protection contre les surintensités de courant reliant une masse dudit système à ladite masse de véhicule et qui fonctionnent comme un courtcircuit lorsque le contact est au travail et qui s'autodétruisent lorsque le contact est au repos et les moyens de démarrage sont reliés directement à la borne positive de la batterie.

Les moyens de protection contre les surintensités coupent la liaison ainsi formée par le voleur entre la borne positive de batterie et la masse du véhicule à travers le câble de batterie et un "câble de fortune". L'autodestruction de ces moyens de protection dissuade le voleur d'une quelconque réparation.

De préférence, les moyens de protection contre les surintensités comprennent un tube contenant un conducteur fusible dégageant un gaz fumigène qui s'échappe dans le véhicule provoqué par une surintensité. L'échappement de gaz fumigène incite vivement le voleur à abandonner le véhicule.

Un système de protection selon l'invention peut non seulement couper l'alimentation électrique du moteur, mais également l'alimentation en carburant du moteur. Dans ce cas sont prévus des moyens commandés par les moyens pour mettre au travail et au repos pour interrompre l'admission de carburant vers le moteur du véhicule lorsque le contact est au repos.

Selon une réalisation préférée, les moyens pour interrompre l'admission du carburant comprennent une électrovanne introduite dans un conduit d'admission entre le moteur et le réservoir du véhicule. L'électrovanne est commandée via une liaison optique, de préférence à impulsions codées, par les moyens pour mettre au travail et au repos qui sont logés dans un boîtier de système derrière le tableau de bord du véhicule. Lorsque le contact est au repos, système de protection en service, l'électrovanne ferme toute arrivée de carburant vers le moteur. La liaison optique est susceptible d'être endommagée lors de l'effraction du véhicule, le voleur cherchant à extraire le boîtier du système de protection du tableau de bord. Dans ces conditions, la liaison optique étant très difficilement réparable par le voleur, le véhicule demeure immobile.

Selon une autre caractéristique de l'invention, le système de protection comprend des moyens d'anti-agression commandant la mise au repos des moyens de coupure d'alimentation pour provoquer au moins l'une des deux alternatives suivantes :
- arrêt du moteur du véhicule à l'opération d'une première durée prédéterminée succédant à l'effleurement d'une touche d'anti-agression du système,
- excitation d'un avertisseur sonore du véhicule à l'expiration de la ladite première durée et pendant une seconde durée prédéterminée.

Lorsque ces moyens d'anti-agression sont activés par une touche particulière du clavier du système, le conducteur agressé par le voleur muni éventuellement d'une armé, laisse le voleur partir avec le véhicule, lequel s'arrête après une durée de quelques dizaines de secondes. L'avertisseur sonore du véhicule est ensuite déclenché, véhicule arrêté, pendant une seconde durée prédéterminée.

D'autres avantages de l'invention apparaîtront plus clairement à la lecture de la description suivante de plusieurs réalisations préférées de l'invention en référence aux dessins annexés correspondants dans lesquels :
- La Fig.1 est un bloc-diagramme schématique d'un système de protection de véhicule selon l'invention, dans lequel sont détaillés des moyens de coupure d'alimentation électrique ;
- La Fig.2 est un schéma électrique détaillé de moyens de mise pou travail des moyens de coupure d'alimentation ; et
- La Fig.3 est un schéma électrique détaillé de moyens d'antiagression inclus dans le système de protection de la Fig.1.

Les divers contacts CO1, CTA et CO2 illustrés dans les figures sont à l'état de repos.

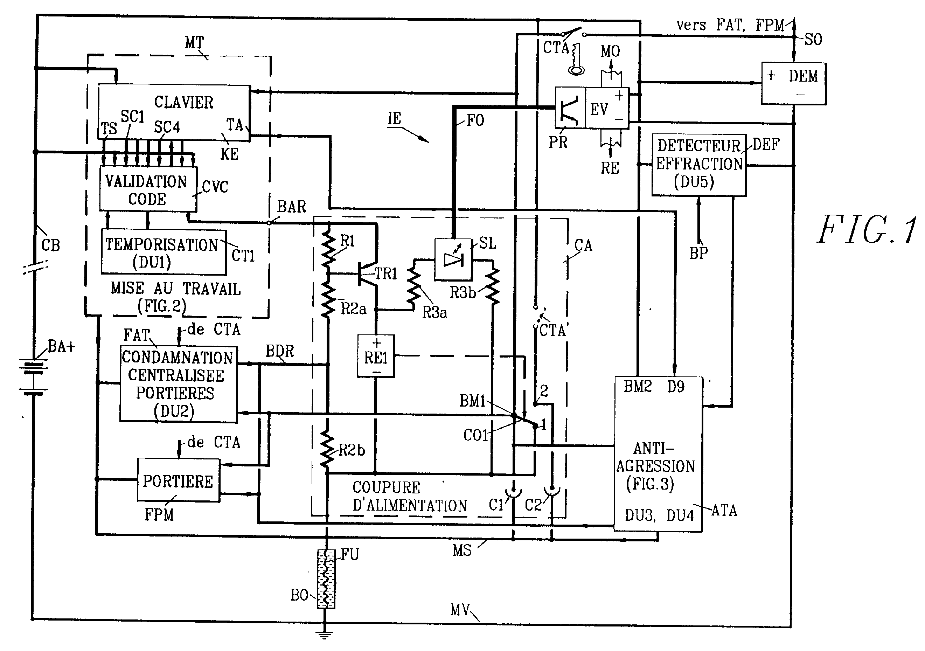

Tel que montré à la Fig.1, un système de protection de véhicule automobile selon l'invention est organisé autour de moyens de coupure d'alimentation CA qui offre deux états stables correspondant à ceux d'un contact à deux directions CO1 d'un premier relais RE1 dans le système. La borne mobile BM1 du contact CO1 est découplée de la masse MS du système par un condensateur chimique C1 et est reliée à la borne de commande position de moyens électromécaniques de démarrage DEM du moteur du véhicule, tels que démarreur et alternateur et instrument relais de ceux-ci, à travers le contacteur CTA de l'antivol à clé du véhicule.

Au repos, la borne mobile BM1 est appliquée sur une première borne fixe du contact CO1 qui est reliée à la masse du système MS. Selon l'invention , la masse MS est reliée à la masse de caisse du véhicule MV à travers des moyens de protection contre des surintensités de courant, appelés "booster" BO, pour priver d'alimentation électrique les moyens de démarrage DEM en cas de tentative d'alimentation directe des moyens de démarrage après shuntage du contacteur d'antivol CTA. Lorsque le relais RE1 est au travail, suite à la composition d'un code personnel au clavier KE du système, comme on le verra dans la suite, la borne mobile BM1 du contact CO1 est appliquée contre une seconde borne fixe de ce contact qui est reliée à la borne de polarité positive BA+ de la batterie du véhicule à travers un câble CB, et qui est découplée de la masse du système MS par un condensateur chimique C2 ; le moteur du véhicule peut être alors mis en marche en fermant le contacteur CTA au moyen de la clé d'antivol.
Le booster BO est logé dans le tableau de bord du véhicule, par exemple derrière le logement prévu pour recevoir un boîtier contenant le système de protection et sur lequel apparait le clavier KE. Le booster peut être un fusible particulier dont le conducteur FU a des longueur , diamètre et composition et donc une intensité de courtcircuit choisis notamment en fonction des caractéristiques de la batterie et du câble CB. En fonctionnement normal, le booster BO relie, comme un courtcircuit, les masses MS et MV. En cas d'effraction, contact CO1 au repos, le voleur tentera de shunter le contacteur d'antivol CTA et de relier ce shunt à la borne positive ,de batterie BA+, typiquement à +12 V. Dans ce cas, la batterie du véhicule est reliée à travers le câble CB et le booster BO qui absorbe toute la puissance de la batterie ; le conducteur de booster FU fond, voire brûle, et prive ainsi les organes de démarrage DEM de toute alimentation électrique. Le fil de protection FU a par exemple une résistance sensiblement égale à la résistance minimale du câble CB quel que soit le type de véhicule, afin de fondre sous une tension nominale d'emploi égale sensiblement à la moitié de la tension de la batterie.

De préférence, le booster BO se présente sous la forme d'un tube contenant le conducteur fusible FU sensiblement nocif, tel que gaz chloré dont l'odeur est particulièrement insupportable. Lorsque le conducteur de protection brûle, suite à la traversée de celui-ci par une intensité maximale, le gaz s'échappe et envahit le véhicule, ce qui incite le voleur à quitter le véhicule.

Selon une autre variante, le contacteur d'antivol CTA est interconnecté, comme montré en traits interrompus courts en CTA′ à la Fig 1 , entre la seconde borne fixe du contacte de relais CO1 et la borne d'alimentation positive du système de surveillance qui est reliée au câble de batterie CB. Selon cette variante, même en absence de shuntage du contacteur CTA, le booster BO maintient à la masse MS la borne positive des moyens de démarrage DEM.

Les moyens de coupure d'alimentation CA comprennent également un circuit à transistor pour activer/désactiver le relais RE1. Ce circuit comporte un transistor PNP TR1 dont le collecteur est relié à la masse de système MS à travers la bobine de relais RE1. L'émetteur de transistor TR1 constitue une borne d'activation de relais BAR en sortie de moyens de mise au travail de relais MT et donc de mise en garde du système de protection, pour démarrer le moteur MO. L'émetteur et la base du transistor TR1 sont reliés par une résistance R1. La base du transistor TR1 est connectée à la masse MS à travers deux résistances R2a et R2b en série. La borne commune BDR aux résistances R2a et R2b sert à bloquer le transistor TR1 et donc à désactiver le relais RE1, en réponse à une tension relativement élevée appliquée par des moyens de mise en service du système de protection FPM, FAT, ou par des moyens d'anti-agression ATA.

Le relais RE1 est connecté en parallèle à des moyens IE pour interrompre l'admission de carburant vers le moteur MO du véhicule, lorsque le système de protection est en service, relais RE1 au repos. Ces derniers moyens IE comprennent une source lumineuse (SL), telle qu'une diode électroluminescente (LED) placée dans le boîtier du système de protection, en face d'une entrée d'une fibre optique FO. A l'autre extrémité de la fibre optique FO est placé un moyen photorécepteur PR, une photodiode par exemple, qui est relié aux bornes de commande d'une électrovanne EV alimentée par la batterie du véhicule.

Les bornes de la source lumineuse SL sont reliées aux bornes de la bobine du relais RE1 à travers des résistances R3a et R3b. Par exemple, l'électrovanne EV est installée dans un conduit de sortie du réservoir de carburant RE du véhicule en amont du carburateur, et la fibre optique FO chemine du tableau de bord du véhicule vers l'électrovanne à travers notamment le réservoir.

Lorsque le relais RE1 est activé par validation du code personnel, comme on le verra dans la suite, la source lumineuse SL excite le moyen photorécepteur PH qui maintient ouverte l'électrovanne EV, ce qui permet d'alimenter le moteur en carburant, en condition normale de fonctionnement.

Dès que le relais RE1 retombe au repos suite à la condamnation de portes signalées par les moyens FMP, FAT, par exemple, aucun faisceau lumineux ne traverse la fibre FO, et l'électrovanne EV est alors désexcitée pour fermer le conduit entre le réservoir RE et l'admission en carburant du moteur MO. En cas d'effraction, se traduisant par exemple par une tentative de retrait du boîtier du système de protection de son logement, la fibre optique FO peut être désolidarisée du boîtier ou être sectionnée. Même si le voleur tente de relier les moyens de démarrage DEM à la batterie, le véhicule ne pourra pas démarrer faute d'admission de carburant par l'électrovanne fermée EV.

La liaison optique SL+FO+PR peut être remplacée, selon une seconde variante, par deux fils conducteurs reliant les résistances R3a et R3b aux bornes du relais inclus dans l'électrovanne EV. Cependant cette seconde variante est moins avantageuse dans la mesure où un voleur peut plus facilement et rapidement former une épissure de fils électriques qu'une épissure de fibre optique, et doit recourir à des moyens coûteux et précis pour positionner une extrémité de la fibre optique, notamment par rapport à la source SL.

De préférence, les extrémités SL et PH de la liaison de transmission FO sont de type "codé", c'est-à-dire que l'extrémité d'émission SL comprend un générateur de signaux codés, tels qu'une suite particulière périodique d'impulsions compatible avec un détecteur localisé à l'autre extrémité PH de la liaison et commandant le relais de l'électrovanne. Les générateur et détecteur accentuent l'inviolabilité de la commande de l'électrovanne.

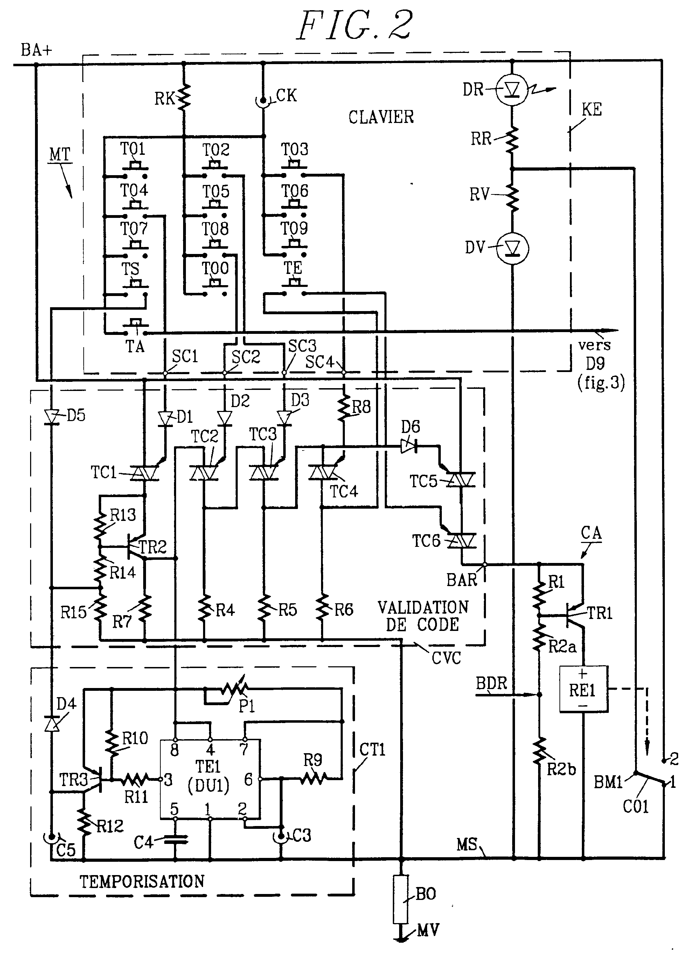

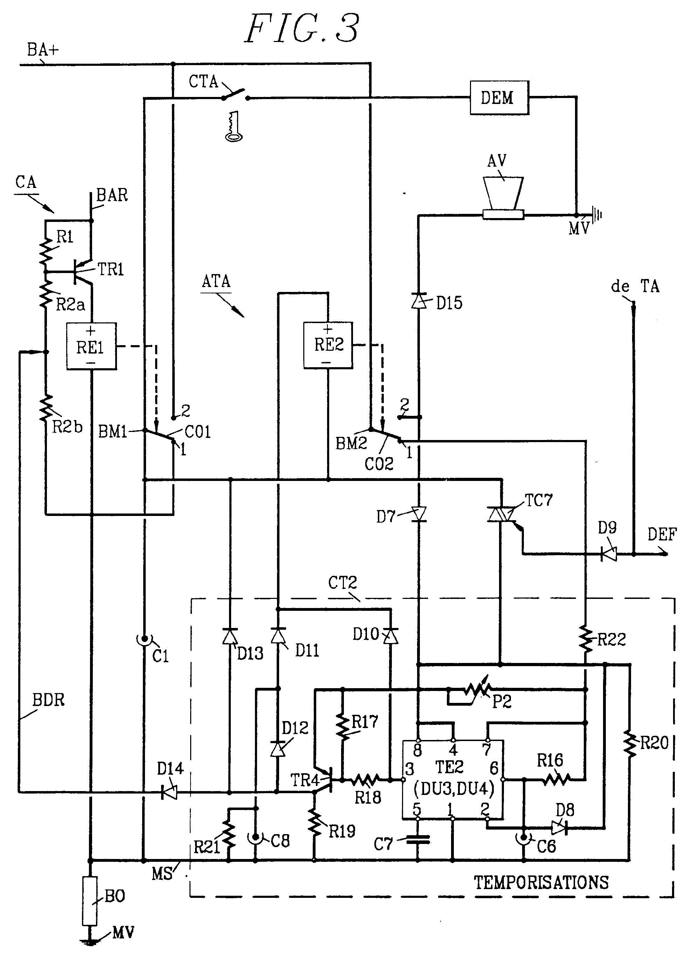

Comme montré à la Fig.2, les moyens de mise au travail MT, comprennent un clavier de vérification de code KE, un circuit de temporisation CT1 et un circuit de validation de code CVC.

Le clavier KE est classique et comporte dix touches de code T00 à T09.Le contact de chaque touche du clavier a une première borne reliée à la borne de la batterie BA+ à travers une résistance RK et un condensateur CK en parallèle. Le clavier comprend, en outre, une touche de validation de code TE ("Enable") une touche de suppression d'erreur TS, une touche anti-agression TA, une diode électroluminescente DV, verte par exemple, pour signaler la mise en garde du système de protection, et une diode electroluminescente DR, rouge par exemple, pour signaler la mise en service du système de protection. L'anode de la diode DV et la cathode de la diode DR sont reliées à travers des résistances respectives RV et RR à la borne mobile BM1 du contact CO1. Les autres bornes des diodes DR et DV sont reliées à la borne de batterie BA+ et à la masse MS respectivement.

Pour mettre en fonctionnement le véhicule avant ou après la fermeture du contacteur CTA suite à l'introduction de la clé d'antivol, le conducteur doit procéder aux opérations suivantes pendant une durée prédéterminée DU1, de l'ordre de 5 à 6 secondes par exemple :
- composer un code personnel à N caractères alphanumériques par exemple ;
- appuyer sur la touche de validation TE ce qui éteint la diode DR et excite la diode DV, suite à l'activation du relais RE1 ; le moteur du véhicule peut être ensuite démarré à l'aide du contacteur CTA.

Si le conducteur s'est trompé, il appuie sur la touche de suppression TS qui déclenche à nouveau une temporisation DU1 pour l'entrée des caractères du code au clavier, ou bien attend l'expiration de la durée DU1.

Dans la suite, et particulièrement en référence à la Fig. 2, on a supposé que le code personnel est composé de quatre chiffres "4823" correspondant à la sélection des touches TO4, TO8, TO2 et TO3 selon cet ordre.

Le circuit de validation du code chiffré CVC comprend N=4 éléments redresseurs contrôlables, tels que triacs TC1 à TC4, qui sont reliés en série directement pour les trois derniers et à travers la jonction émetteur-collecteur d'un transistor PNP TR2 pour les deux premiers. Ainsi, l'anode du premier triac TC1 est reliée à la borne positive BA+ de la batterie du véhicule, la cathode du triac TC2 est reliée au collecteur du transistor TR2, et les cathodes des triacs TC3 et TC4 sont directement reliées respectivement aux anodes des triacs TC2 et TC3. Les cathodes des triacs TC2 à TCN = TC4 sont reliées à la masse du véhicule, à travers des résistances respectives R4, R5 et R6 tandis que le collecteur du transistor TR2 est relié à la masse MS à travers, d'une part, une résistance de collecteur R7, d'autre part, le circuit de temporisation CT1. Les gâchettes des triacs TC1 à TCN = TC4 sont reliées à des sorties de codage SC1 à SCN =SC4 du clavier KE, constituant des secondes bornes des N touches de code, TO4, TO8, TO2 et TO3 selon l'exemple précédent, à travers des diodes D1,D2 et D3 et une résistance R8, respectivement. Lorsque les touches T00 à T09 du clavier sont sollicitées par le conducteur selon l'ordre indiqué par le code personnel, les N sorties SC1 à SCN=SC4 appliquent successivement des impulsions aux gâchettes des triacs TC1 à TCN=TC4 pour les débloquer. Toutefois, ce déblocage de triacs ne peut être exécuté que pendant la temporisation DU1.

Le circuit de temporisation CT1 est structuré autour d'un temporisateur à bascule de Schmitt TE1 du type NE555. Les bornes 8 et 4 du temporisateur TE1 constituent l'entrée de commande de celui-ci qui déclenche la temporisation DU1 en réponse à un front de tension descendant. La durée DU1 est déterminée par un circuit résistance-capacité P1-R9-C3 comportant un potentiomètre P1 entre les bornes 4 et 7 du temporisateur TE1 , une résistance R9 entre les bornes 7 et C2 du temporisateur TE1, et un condensateur chimique C3 entre les bornes 6-2 du temporisateur TE1 et la masse du système MS. Le potentiomètre P1 sert à ajuster la durée DU1. Les bornes 1 et 5 du temporisateur TE1 sont reliées à la masse directement et à travers un condensateur C4. La borne 3 du temporisateur TE1 constitue une borne de sortie qui délivre une transition montante à la fin de la durée DU1, tant que le temporisateur TE1 est alimenté.

Le circuit de temporisation CT1 comprend également un transistor PNP TR3 pour bloquer le transistor TR2. L'émetteur du transistor TR3 est relié directement au collecteur du transistor TR2 et à l'entrée de commande 8-4 du temporisateur TE1, et à travers une résistance R10 à la base du transistor TR3 . La sortie 3 du temporisateur TE1 est reliée à la base du transistor TR3 à travers une résistance R11. Le collecteur du transistor TR3 est relié à la masse MS à travers un condensateur chimique C5 et une résistance R12 connectées en parallèle.

La base du transistor TR2 dans le circuit de validation CVC est reliée à l'émetteur du transistor TR2 et à la cathode du triac TC1 à travers une résistance R13, et à la masse MS à travers deux résistances en série R14 et R15. La borne commune aux résistances R14 et R15 est reliée à travers une diode D4 au collecteur du transistor TR3 à travers une diode D4, et à la seconde borne de la touche de suppression TS à travers une diode D5.

Lorsque le premier triac TC1 est débloqué en réponse à une impulsion à la sortie SC1 et donc au premier caractère du code, le transistor TR2 est à l'état conducteur et déclenche le temporisateur TE1. A l'expiration de la durée déclenchée DU1, le transistor TR3 passe à l'état conducteur et applique une tension à la borne commune aux résistances R14 et R15. Le transistor TR2 devient alors bloqué et empêche le passage de tout courant à travers les triacs TC2 à TC4 : aucun courant n'est produit par les cathodes des triacs TC3 et TC4 à l'expiration de la durée DU1 lorsqu'au moins l'une des N sorties de codage SC1 à SCN du clavier n'a pas reçue d'impulsion.

Le circuit de validation CVC comprend également deux autres triacs TC5 et TC6 connectés en série, l'anode du triac TC5 étant reliée à la borne positive de batterie BA+ et la cathode du triac TC6 étant reliée à l'émetteur BAR du transistor TR1 dans les moyens de coupure d'alimentation CA. Les gâchettes des triacs TC5 et TC6 sont respectivement reliées aux cathodes des triacs TC3 et TC4 à travers une diode D6 et le contact de la touche de validation TE, respectivement.

Lorsque les trois premiers, et plus généralement les N-1 premiers caractères du code sont composés au clavier KE, le triac TC5 est débloqué, et en réponse au dernier caractère du code et à l'enfoncement de la touche TE, le triac TC6 est ensuite débloqué ; le transistor TR1 et le relais RE1 dans les moyens de coupure d'alimentation CA sont activés afin d'appliquer la tension de batterie au contacteur d'antivol CTA, suite à la mise au travail du contact CO1.

Si au moins la touche TE n'est pas sollicitée en dernière avant l'expiration de la durée DU1 déclenchée par le temporisateur TE1, le triac TC6 demeure bloqué. Il est à noter que le triac TC6 est maintenu débloqué tant que le triac TC5 est débloqué, ce qui évite tout blocage du triac de validation TC6 de l'extérieur de la console du système de protection.

Le nombre N de caractères du code ainsi que le code sont préprogrammés par le constructeur du système.

Selon d'autres variantes, les éléments redresseurs contrôlables TC1 à TC6 peuvent être des thyristors, ou de tels éléments commandés par les sorties SC1 à SCN à travers des optocoupleurs.

Les moyens de mise en service pour mettre au repos le relais RE1 dans les moyens de coupure d'alimentation sont par exemple un circuit de condamnation classique de portière du véhicule FPM lorsque le véhicule se ferme à clé seulement par l'une des portes avant, ou un circuit de condamnation centralisée des portières FAT lorsque toutes les portières du véhicule sont verrouillées par commande de l'une des portières. Chacun des circuits FPM et FAT comporte une première borne d'entrée qui est reliée à la borne mobile BM1 du contact CO1 et une seconde borne d'entrée qui est reliée à la sortie SO du contacteur d'antivol CTA, elle-même reliée aux moyens de démarrage DEM. Tant que le contacteur CO1 est au travail, correspondant à l'état de fonctionnement du véhicule, la seconde borne du circuit FPM,FAT est portée à la tension de la batterie, 12 volts généralement, bloque un transistor dans le circuit FPM, FAT et par suite n'applique aucune tension à la borne BDR du circuit de base du transistor TR1. Lorsque le contacteur d'antivol est ouvert par exemple suite à l'arrêt du véhicule , le contact CO1 étant encore au travail, la première borne du circuit FPM,FAT polarise ledit transistor de circuit, et applique une tension à la borne BDR ; le transistor TR1 devient non- conducteur et désactive le relais RE1, et le contact CO1 passe à l'état de repos pour mettre en service le système de protection. Toutefois, lorsqu'est choisi le circuit de condamnation centralisée FAT, ledit transistor de ce circuit alimente un temporisateur qui applique ladite tension à la borne BDR après une durée déterminée DU2 succédant à l'ouverture du contacteur CTA.

Le système de protection de véhicule illustré à la Fig. 1 comprend également des moyens d'anti-agression ATA qui provoquent l'arrêt du moteur MO et déclenchent un avertisseur sonore AV, tel que Klaxon urbain, en réponse à un effleurement de la touche de clavier TA, lorsque le moteur du véhicule n'est pas arrêté et donc le contact de relais CO1 et le contacteur d'antivol CTA sont au travail. Plus précisément, lorsque le conducteur du véhicule doit quitter son véhicule sous la contrainte notamment d'une arme, moteur au ralenti, celui-ci peut solliciter la touche d'anti-agression TA, à l'insu du voleur. Selon la réalisation illustrée à la Fig.. 3 est prévu un circuit de double temporisation CT2 qui après une première durée prédéterminée DU3, de 25 secondes par exemple, succédant à l'enfoncement de la touche TA, déclenche l'arrêt du moteur du véhicule et l'excitation de l'avertisseur sonore, puis désactive l'arrêt de l'avertisseur au bout d'une seconde durée prédéterminée DU4, de 30 secondes par exemple, plus longue que la durée DU3.

Le circuit de temporisation CT2 comporte un temporisateur TE2 du type NE555, un circuit de constante temps à potentiomètre P2, résistance R16 et condensateur chimique C6, un condensateur C7, et un transistor PNP TR4 avec résistance de base-émetteur R17 , résistance de base R18 et résistance de collecteur R19 qui sont agencés de la même manière que les éléments respectifs TE1, P1, R9, C3, C4, TR3, R10, R11, et R12 inclus dans le circuit de temporisation CT1 (Fig.2). Comparativement au circuit CT1, le circuit à double temporisation CT2 a son entrée de commande, correspondant à l'entrée 8-4 du temporisateur TE2, qui peut être excitée indépendamment par deux commandes des durées DU3 et DU4 matérialisées par un élément redresseur contrôlable, tel qu'un triac TC7, dont l'anode est reliée à la borne mobile BM1 du contact CO1, et par une diode D7 dont l'anode reçoit un courant d'excitation d'avertisseur. Les cathodes du triac TC7 et de la diode D7 sont ainsi reliées à l'émetteur du transistor TR4 et à la borne de commande 8-4 du temporisateur TE2, et ainsi qu'à la masse MS, à travers une résistance R20, et à la cathode d'une diode D8. L'anode de la diode D8 est reliée aux bornes 6-2 du temporisateur TE2.

La gâchette du triac TC7 est reliée à la touche d'anti-agression TA et à une sortie d'un détecteur d'effraction DEF à travers une diode D9. Comme montré à la Fig.1, le détecteur d'effraction est alimenté par la batterie et est connecté par exemple à une borne du plafonnier BP du véhicule. En réponse à une mise à la masse de cette borne BP par effraction du véhicule, par exemple par ouverture du véhicule sans avoir mis en garde le système de protection au bout d'une durée DU5 + DU3, le détecteur DEF transmet un signal à la gâchette du triac TC7 après la durée DU5 afin que l'avertisseur AV soit déclenché après l'expiration de la durée DU3 succédant à la durée DU5 et pendant la durée DU4.

Les moyens d'anti-agression ATA comprennent également un relais RE2 à contact à deux direction CO2 qui passe au travail pendant une durée d'excitation DU4 de l'avertisseur sonore AV sous la commande du circuit de double temporisation CT2. Une borne positive de la bobine du relais RE2 est reliée à la sortie 3 du temporisateur TE2 à travers une diode D10, et au collecteur du transistor TR4 à travers deux diodes D11 et D12 en série. La borne commune aux diodes D11 et D12 est découplée de la masse MS par un condensateur chimique C8 et une résistance R21 en parallèle. Une borne négative du relais RE2 et l'anode du triac TC7 sont également reliées à la borne mobile du contact BM1. Le collecteur du transistor TR4 est également relié au contact mobile BM1 du contact CO1 à travers une diode de shuntage de second relais D13, et à la borne BDR commune aux résistances R2a et R2b à travers une diode de désactivation de premier relais D14.

La borne mobile BM2 du contact CO2 est à la tension de la batterie par la borne BA+. Au repos, la borne BM2 est reliée à une première borne fixe du contact CO2 qui la connecte à la borne 7 du temporisateur TE2 à travers une résistance de constante de temps R22, et donc à la borne commune au potentiomètre P2 et à la résistance R16. Lorsque le relais RE2 est au travail, la borne mobile BM12 est reliée à l'anode de la diode de commande D7 du temporisateur TE2 à travers une seconde borne du contact CO2, ainsi qu'à la borne positive de l'avertisseur sonore AV à travers une diode D15.

Le fonctionnement des moyens d'anti-agression ATA est le suivant; contact CO1 et contacteur CTA au travail, et contact CO2 au repos.

Lorsqu'une impulsion est transmise à la gâchette du triac TC7 par la touche d'anti-agression TA du clavier, le triac TC7 est débloqué et active l'entrée de commande 8-4 du temporisateur TC2, l'anode du triac TC7 étant reliée à la borne positive de batterie BA+ à travers le contact CO1 au travail. La première temporisation DU3 est définie par les résistances P2 et R22 qui sont connectées en parallèle puisque le contact CO2 est au repos et relie la borne de batterie BA+ à la résistance R22, et par la résistance R16 et le condensateur C6. Au cours de la durée DU3, le voleur s'est emparé du véhicule et s'éloigne, sans s'inquiéter ultérieurement de l'arrêt du moteur et du déclenchement de l'avertisseur.

A l'expiration de la durée DU3, la sortie 3 du temporisateur TE2 rend conducteur le transistor TR4 ce qui, dans le circuit de coupure d'alimentation CA, bloque fugitivement le transistor TR1 à travers la diode D14 et bascule à l'état de repos le relais RE1. La borne mobile-BM1 du contact CO1 vient s'appliquer sur la première borne-fixe du contact CO1 qui est à la masse. Le contacteur d'antivol CTA n'est plus alimenté et le moteur MO du véhicule s'arrête. La borne négative du relais RE2 est également mise à la masse et le triac TC7 et le transistor TR4 sont bloqués.

En outre l'état conducteur du transistor TR4, avant la mise au repos du relais RE1, contribue à appliquer un potentiel d'excitation à la borne positive du relais RE2 à travers les diodes D10, D11, et D12. Le relais RE2 est ainsi prêt à être activé par la décharge du condensateur C8 afin que son contact CO2 bascule pour mettre à la tension de batterie de la borne BA+ les anodes des diodes D15 et D7 en réponse au passage à l'état de repos du relais RE1. Le temporisateur TE2 est à nouveau déclenché pour la seconde temporisation DU4 au cours de laquelle l'avertisseur sonore AV fonctionne. A la fin de la première temporisation DU3, le condensateur C6 s'est déchargé rapidement via la diode D8, et après l'activation du relais RE2, la résistance R22 est déconnectée de la borne de batterie BA+. La seconde temporisation DU4 ne dépend que des caractéristiques des éléments P2, R16, et C6 et est donc plus grande que la première temporisation DU3. A la fin de la durée DU4, la sortie 3 du temporisateur TE2 débloque le transistor TR4 dont le courant de collecteur traverse la diode de shuntage de relais D13. Le relais RE2 retombe à l'état de repos, et le contact CO2 déconnecte l'avertisseur AV de la borne de la batterie BA+.

On notera que l'invention consiste également en des systèmes de protection comprenant, seuls ou en combinaison, les moyens essentiels suivants : les moyens de protection contre les surintensités de courant BO, les moyens pour interrompre l'admission en carburant IE, et les moyens d'anti-agression ATA avec une simple temporisation DU3 sans excitation de l'avertisseur AV, ou avec les deux temporisations DU3 et DU4

Par ailleurs, les relais RE1 et RE2 à contact CO1 et CO2 peuvent être remplacés par d'autres moyens équivalents connus, tels que des éléments semiconducteurs.

## Revendications

1. Système de protection de véhicule comprenant
- des moyens de coupure d'alimentation (CA) incluant un contact à deux directions (CO1) qui relie les moyens de démarrage du véhicule (DEM) respectivement à une borne positive (BA+) de la batterie du véhicule et à la masse du véhicule (MV) en réponse à des états de travail et repos , un contacteur d'antivol (CTA) du véhicule étant connecté en série avec ledit contact (CO1) à l'état de travail,
- des moyens (MT) pour mettre au travail les moyens de coupure d'alimentation après ouverture normale des portières du véhicule, et
- des moyens (FPM,FAT) pour mettre au repos les moyens de coupure d'alimentation par condamnation d'au moins l'une des portières,
caractérisé en ce qu'il comprend des moyens de protection contre des surintensités de courant (BO) reliant une masse (MS) dudit système à ladite masse de véhicule (MV) et qui fonctionnent comme un courtcircuit lorsque le contact (CO1) est au travail, et qui s'autodétruisent lorsque le contact est au repos et les moyens de démarrage (DEM) sont reliés directement à la borne positive de la batterie (BA+).

2. Système conforme à la revendication 1, dans lequel les moyens de protection contre les surintensités de courant comprennent un tube (BO) contenant un conducteur fusible (FU) dégageant un gaz fumigène qui s'échappe dans le véhicule suite à une surintensité.

3. Système conforme à la revendication 1 ou 2, caractérisé en ce qu'il comprend des moyens (IE) commandés par, les moyens pour mettre au travail et au repos (MT,FPM,FAT) pour interrompre l'admission de carburant vers le moteur (MO) du véhicule lorsque le contact (CO1) est au repos.

4. Système conforme à la revendication 3, dans lequel les moyens pour interrompre l'admission du carburant (IE) comprennent une électrovanne (EV) introduite dans un conduit d'admission entre le moteur (MO) et le réservoir (RE) du véhicule.

5. Système conforme à la revendication 4, dans lequel l'électrovanne (EV) est commandée à travers une liaison optique (FO) ayant une extrémité de photoréception (SL) logée dans un boîtier contenant ledit système de protection et une extrémité de photoréception (PR) liée à l'électrovanne.

6. Système conforme à la revendication 4 ou 5, dans lequel l'électrovanne (EV) est commandée par l'intermédiaire d'un générateur de signaux codés (SL) et d'un détecteur de signaux codés (PH) localisés respectivement dans le boîtier dudit système et à proximité de l'électrovanne, et reliés entre eux par une liaison de transmission de signaux codés (FO).

7. Système conforme à l'une quelconque des revendications 1 à 6, caractérisé en ce qu'il comprend des moyens d'anti-agression (ATA) commandant la mise au repos des moyens de coupure d'alimentation (CA) pour provoquer au moins l'une des deux alternatives suivantes :
- arrêt du moteur (MO) du véhicule à l'expiration d'une première durée prédéterminée (DU3) succédant à l'effleurement d'une touche anti-agression (TA) du système,
- excitation d'un avertisseur sonore (AV) du véhicule à l'expiration de ladite première durée (DU3) et pendant une seconde durée prédéterminée (DU4).

8. Système conforme à la revendication 7, dans lequel les moyens d'anti-agression (ATA) comprennent un unique temporisateur (TE2) ayant deux constantes de temps (P2, R22, R16, C6 ; P2, R16, C6) qui sont respectivement sélectionnées par l'effleurement de la touche d'anti-agression (TA) au début de la première durée (DU3), et par une sortie (3) du temporisateur à travers la mise au repos des moyens de coupure d'alimentation (CA) et la mise au travail de moyen d'excitation (RE2) de l'avertisseur (AV) au début de la seconde durée (DU4).

9. Système conforme à l'une quelconque des revendications 1 à 8, dans lequel les moyens (MT) pour mettre au travail les moyens de coupure d'alimentation comprennent :
- un clavier (KE) pour vérifier un code personnel composé de caractères en nombre et ordre prédéterminés,
- des moyens (CVC) pour valider la composition du code personnel pendant une temporisation prédéterminée (DU1) afin de mettre au travail les moyens de coupure d'alimentation (CA), et
- des moyens de temporisation (CT1) pour déclencher la temporisation prédéterminée (DU1) en réponse à un premier caractère du code (SC1) vérifié par le clavier, et pour maintenir au repos les moyens de coupure d'alimentation (CA) à l'expiration de la temporisation prédéterminée, à défaut de validation du code pendant cette durée.

10. Système conforme à la revendication 9, dans lequel les moyens pour valider (CVC) comprennent des éléments redresseurs contrôlables (TC1-TCN) qui sont respectivement débloqués en réponse aux caractères de code vérifiés (SC1-SCN) par le clavier (KE), lesdits éléments redresseurs étant connectés en série à l'exception des deux premiers éléments redresseurs (TC1,TC2) qui sont associés aux deux premiers caractères du code (SC1,SC2) et qui sont reliés à deux électrodes d'un transistor (TR2) qui est conducteur pour commander le déclenchement de ladite temporisation prédéterminée (DU1) en réponse au premier caractère de code vérifié, et qui est bloqué par les moyens de temporisation (CT1) à l'expiration de la temporisation (DU1).

11. Système conforme à la revendication 9 ou 10, dans lequel les moyens pour valider (CVC) comprennent deux éléments redresseurs contrôlables (TC5,TC6) qui sont connectés en série entre la borne positive (BA+) de la batterie et une borne d'activation (BAR) des moyens de coupure d'alimentation (CA) et qui sont respectivement débloqués successivement en réponse à l'avant-dernier caractère de code (SC3) vérifié par le clavier (KE), et en réponse au dernier caractère de code (SC4) vérifié par le clavier puis à la fermeture d'un contact de touche de validation (TE) du clavier.

## Patentansprüche

1. Fahrzeugsicherungssystem mit
- Einrichtungen zur Unterbrechung der Stromversorgung (CA), die einen in zwei Richtungen wirkenden Kontakt (CO1), der den Anlasser des Fahrzeugs (DEM) jeweils mit einem positiven Anschluß (BA+) der Batterie des Fahrzeugs und mit der Masse des Fahrzeugs (MV) als Antwort auf einen Arbeits- und Ruhezustand verbindet, und einen Kontakt zur Diebstahlsicherung (CTA) des Fahrzeugs, der im Arbeitszustand in Reihe mit dem Kontakt (CO1) verbunden ist, aufweisen,
- Einrichtungen (MT) zum Inbetriebsetzen der Einrichtungen zur Unterbrechung der Stromversorgung nach einer normalen Öffnung der Fahrzeugtüren, und mit
- Einrichtungen (FPM, FAT), um die Einrichtungen zur Unterbrechung der Stromversorgung durch Verriegelung mindestens einer der Türen in den Ruhezustand zu versetzen,
dadurch gekennzeichnet, daß es Einrichtungen zur Überstromsicherung (BO) aufweist, die eine Masse (MS) des Systems mit der Masse des Fahrzeugs (MV) verbinden und die wie ein Kurzschluß wirken, wenn der Kontakt (CO1) geschlossen ist, und die sich selbst zerstören, wenn der Kontakt offen ist und der Anlasser (DEM) direkt mit dem positiven Anschluß der Batterie (BA+) verbunden wird.

2. System nach Anspruch 1, bei dem die Einrichtungen zur Überstromsicherung ein Rohr (BO) mit einem schmelzbaren Leiter (FU) aufweisen, der ein Rauchgas entweichen läßt, das sich bei einem Überstrom im Fahrzeug verströmt.

3. System nach Anspruch 1 oder 2, dadurch gekennzeichnet, daß es Einrichtungen (IE), die von den Einrichtungen zur Inbetriebsetzung und zur Abschaltung (MT, FPM, FAT) gesteuert werden, zur Unterbrechung der Kraftstoffzufuhr zum Motor (MO) des Fahrzeugs, wenn der Kontakt (CO1) in Ruhe ist, aufweist.

4. System nach Anspruch 3, bei dem die Einrichtungen zur Unterbrechung der Kraftstoffzufuhr (IE) ein Elektroventil (EV), das in einer Zufuhrleitung zwischen dem Motor (MO) und dem Tank (RE) des Fahrzeugs angeordnet ist, aufweisen.

5. System nach Anspruch 4, bei dem das Elektroventil (EV) über eine optische Verbindung (FO) gesteuert wird, die ein in dem Gehäuse, das das Sicherungssystem enthält, angeordnetes Ende zur Fotorezeption (SL) und ein mit dem Elektroventil verbundenes Ende zur Fotorezeption (PR) aufweist.

6. System nach Anspruch 4 oder 5, bei dem das Elektroventil (EV) durch Zwischenschaltung eines Generators codierter Signale (SL) und eines Empfängers codierter Signale (PH) gesteuert wird, die jeweils im Gehäuse des Systems und in der Nähe des Elektroventils angeordnet sind und die untereinander durch eine Übertragungsleitung für die codierten Signale (FO) verbunden sind.

7. System nach einem der Ansprüche 1 bis 6, dadurch gekennzeichnet, daß es Anti-Aggressions-Einrichtungen (ATA) aufweist, die das Stillsetzen der Einrichtungen zur Unterbrechung der Stromversorgung (CA) steuern, um mindestens eine der beiden folgenden Alternativen hervorzurufen:
- Abschalten des Motors (MO) des Fahrzeugs nach Ablauf einer ersten vorgegebenen Zeitdauer (DU3) infolge einer leichten Berührung einer Anti-Aggressions-Taste (TA) des Systems,
- Betätigung einer Hupe (AV) des Fahrzeugs nach Ablauf der ersten Zeitdauer (DU3) und während einer zweiten vorgegebenen Zeitdauer (DU4).

8. System nach Anspruch 7, bei dem die Anti-Aggressions-Einrichtungen (ATA) einen einzigen Verzögerer (TE2) mit zwei Zeitkonstanten (P2, R22, R16, C6; P2, R16, C6), die jeweils durch das leichte Berühren der Anti-Aggressions-Taste (TA) am Beginn der ersten Zeitdauer (DU3) und durch einen Ausgang (3) des Verzögerers über das Stillsetzen der Einrichtungen zur Unterbrechung der Stromversorgung (CA) und das Inbetriebsetzen der Einrichtungen (RE2) zur Betätigung der Hupe (AV) am Beginn der zweiten Zeitdauer (DU4) ausgewählt werden, aufweisen.

9. System nach einem der Ansprüche 1 bis 8, bei dem die Einrichtungen (MT) zum Inbetriebsetzen der Einrichtungen zur Unterbrechung der Stromversorgung folgende Komponenten aufweisen:
- eine Tastatur (KE) zur Bestätigung eines persönlichen Codes mit einer vorgegebenen Anzahl und Ordnung von Zeichen,
- Einrichtungen (CVC) zur Bestätigung der Zusammensetzung des persönlichen Codes während einer vorgegebenen Verzögerung (DU1), um die Einrichtungen zur Unterbrechung der Stromversorgung (CA) in Betrieb zu setzen, und
- Verzögerungseinrichtungen (CT1) zum Auslösen der vorgegebenen Verzögerung (DU1) als Antwort auf ein erstes Zeichen (SC1) des durch die Tastatur bestätigten Codes und zum Außerbetriebhalten der Einrichtungen zur Unterbrechung der Stromversorgung (CA) bis zum Ablauf der vorgegebenen Verzögerung, wenn eine Bestätigung des Codes während dieser Zeitdauer fehlt.

10. System nach Anspruch 9, bei dem die Einrichtungen zur Bestätigung (CVC) steuerbare Gleichrichterelemente (TC1-TCN) aufweisen, die jeweils durch die von der Tastatur (KE) bestätigten Zeichen des Codes (SC1-SCN) freigegeben werden, wobei die Gleichrichterelemente in Reihe geschaltet sind mit Ausnahme von zwei ersten Gleichrichterelementen (TC1, TC2), die mit zwei ersten Zeichen des Codes (SC1, SC2) in Beziehung stehen und die mit zwei Elektroden eines Transistors (TR2) verbunden sind, der zur Steuerung der Auslösung der ersten vorgegebenen Verzögerung (DU1) als Antwort auf das erste Zeichen des bestätigten Codes leitend ist, und der durch die Verzögerungseinrichtungen (CT1) nach Ablauf der Verzögerung (DU1) gesperrt wird.

11. System nach Anspruch 9 oder 10, bei dem die Einrichtungen zur Bestätigung (CVC) zwei steuerbare Gleichrichterelemente (TC5, TC6) aufweisen, die in Reihe zwischen dem positiven Anschluß (BA+) der Batterie und einem Aktivierungsanschluß (BAR) der Einrichtungen zur Unterbrechung der Stromversorgung (CA) geschaltet sind und die jeweils nacheinander als Antwort auf das vorletzte Zeichen (SC3) des durch die Tastatur (KE) bestätigten Codes und als Antwort auf das letzte Zeichen (SC4) des durch die Tastatur bestätigten Codes blockiert werden bis zum Schließen eines Bestätigungstastenkontakts (TE) der Tastatur.

## Claims

1. A vehicle protection system comprising:
means (CA) for cutting the power supply including a contact (CO1) with two positions which connects the starting means (DEM) of the vehicle respectively to a positive terminal (BA+) of the vehicle battery and to the vehicle ground (MV) in response to working and rest states, an anti-theft contactor (CTA) of the vehicle being connected in series with the said contact (CO1) in the working state,
means (MT) for putting in the working state the means for cutting the supply after normal opening of the doors of the vehicle, and
means (FPM,FAT) for putting into the rest state the means for cutting the supply on the locking of at least one of the doors,
characterised in that it comprises means (BO) for protecting against overcurrent connecting a ground (MS) of the said system to the said vehicle ground (MV) and which functions as a short circuit when the contact (CO1) is in the working position and which self destructs when the contact is in the rest position and the starting means (DEM) are connected directly to the positive battery terminal (BA+).

2. A system according to claim 1 in which the means for protection against overcurrent comprise a tube (BO) containing a fusible conductor (FU) giving off a smoke producing gas which escapes into the vehicle following an overcurrent.

3. A system according to claim 1 or 2 characterised in that it comprises means (IE) controlled by the means (MT,FPM,FAT) for putting the cutting means into the working or rest state for interrupting the supply of fuel to the motor (MO) of the vehicle when the contact (CO1) is in the rest position.

4. A system according to claim 3 in which the means (IE) for interrupting the supply of fuel comprises a solenoid valve (EV) disposed in the intake conduit between the engine (MO) and the fuel tank (RE) of the vehicle.

5. A system according to claim 4 in which the solenoid valve (EV) is controlled via an optical link (FO) having a light receiving end (SL) disposed in a case containing said protection system and a photoreceptor end (PR) linked to the solenoid valve.

6. A system according to claim 4 or 5 in which the solenoid valve (EV) is controlled by means of a generator (SL) of coded signals and a detector (PH) of coded signals located respectively in the case of the said system and in proximity to the solenoid valve, and connected to each other by a link (FO) for transmitting coded signals.

7. A system according to any one of claims 1 to 6 characterised in that it comprises anti-attack means (ATA) controlling the setting to the rest state of the means (CA) for cutting the supply in order to cause at least one of the two following alternatives:
stopping of the motor (MO) of the vehicle at the end of a first predetermined time (DU3) following the touching of an anti-attack key (TA) of the system,
activation of an audible warning (AV) of the vehicle on the expiry of the said first period (DU3) and during a second predetermined period (DU4).

8. A system according to claim 7 in which the anti-attack means (ATA) comprises a single timer (TE2) having two time constants (P2,R22,R16,C6;P2,R16,C6) which are respectively selected by the touching of the anti-attack key (TA) at the beginning of the first period (DU3) and by an output (3) of the timer through the setting in the rest state of the means (CA) for cutting the supply and the putting into the working state of the means (RE2) for activating the warning (AV) at the beginning of the second period (DU4).

9. A system according to any one of claims 1 to 8 in which the means (MT) for putting into the working state the means for cutting the supply comprise:
a keyboard (KE) for verifying a personal code composed of characters of a predetermined number and order,
means (CVC) for validating the composition of the personal code during a predetermined time (DU1) after putting into the working state the means for cutting the supply (CA), and
timing means (CT1) for starting the predetermined delay (DU1) in response to a first code character (SC1) verified by the keyboard and for keeping in the rest state the means (CA) for cutting the supply on the expiry of the predetermined time in the absence of validating the code during this period.

10. A system according to claim 9 in which the means for validating (CVC) comprise controllable rectifier elements (TC1-TCN) which are respectively unblocked in response to verified code characters (SC1-SCN) by the keyboard (KE), said rectifier elements being connected in series with the exception of the first two rectifier elements (TC1,TC2) which are associated with the first two code characters (SC1,SC2) and which are connected to two electrodes of a transistor (TR2) which is conductive to control the starting of the said predetermined time (DU1) in response to the first verified code character and which is blocked by the timer means (CT1) on the expiry of the period (DU1).

11. A system according to claim 9 or 10 in which the means for validating (CVC) comprise two controllable rectifier elements (TC5,TC6) which are connected in series between the positive terminal (BA+) of the battery and an activation terminal (BAR) of the means (CA) for cutting the supply and which are respectively successively unblocked in response to the penultimate code character (SC3) verified by the keyboard and in response to the last code character (SC4) verified by the keyboard then to the closing of a validation key (TE) of the keyboard.
